# EUROPEAN PATENT APPLICATION

(11) **EP 3 375 981 A1**
(43) Date of publication of application: **19.09.2018**
(21) Application number: 18162106.1
(22) Date of filing: 15.03.2018
(51) Int. Cl.: F01D 15/10

(54) **VARIABLE SPEED AC BUS POWERED TAIL CONE BOUNDARY LAYER INGESTION THRUSTER**

(30) Priority: 17.03.2017 US 201715462266
(71) Applicant: Hamilton Sundstrand Corporation, Charlotte, NC 28217-4578 (US)
(72) Inventor: HIMMELMANN, Richard A., Beloit, WI 53511 (US)
(74) Representative: Dehns

(57) **Abstract**

A system for hybrid propulsion for an aircraft includes a gas turbine engine (102) having a power shaft (107). A motor generator (106) is operatively connected to the power shaft of the gas turbine engine and configured to produce electric power. An electric propulsion motor (111) is configured to receive the electric power and be selectively driven at an operational speed independent of a rotational speed of the power shaft.

## Description

### BACKGROUND

Exemplary embodiments pertain to the art of aircraft thrusters and more particularly to a variable speed AC bus powered tail cone boundary layer ingestion thruster.

Distributed hybrid electric aircraft propulsion systems can re-energize the aircraft boundary layer to increase the propulsion efficiency of the aircraft. For example, one concept for hybrid electric airframes incorporates a 1 - 5 MW non-cryogenic motor or cryogenic superconducting motor or generator in the propulser of the gas turbine engine. Another hybrid airframe system imbeds a synchronous electric motor connected to the propulsion fan. In this concept, the propulsion fan is configured to spin at the same speed as the gas turbine fan. This hybrid concept eliminates the need for relatively heavy power electronics components, which may provide some efficiencies due to weight reduction and ease of maintenance.

One recent concept for a synchronized system includes a generator mounted in the gas turbine engine that provides alternating current (AC) power. The AC power is connected to a permanent magnet AC motor for synchronous operation of the motor with the AC signal. Although this concept may reduce the volume of the power electronics necessary for operation, one disadvantage is that the synchronicity between the gas turbine engine generator and the electric propulsion motor forces both the gas turbine engine and the electric motor driven propulsion fan to operate at the same speed without the ability to independently vary their respective speeds. Some efficiencies gained by having an induction propulsion motor working in conjunction with a synchronous gas turbine engine generator may be lost.

In another design, to vary the speed of the electric propulser with respect to the gas turbine engine, the engine may generate an AC generator signal and rectify that signal to DC, then invert the signal for the propulsion motor. However, with this approach the efficiencies gained from asynchronous operation of the gas turbine motor and the electric propulser may be lost because the power electronics associated with the generator (e.g., a 30 MW generator) can weigh thousands of pounds and consume a relatively large space on the airframe.

### BRIEF DESCRIPTION

Disclosed is a system for hybrid propulsion for an aircraft. The system includes a gas turbine engine having a power shaft. A motor generator is operatively connected to the power shaft of the gas turbine engine and configured to produce electric power. An electric propulsion motor is configured to receive the electric power and be selectively driven at an operational speed independent of a rotational speed of the power shaft.

A method for hybrid propulsion for an aircraft is also disclosed that includes generating electric power via a motor generator operating within a gas turbine engine. The method further includes driving an induction propulsion motor with the electric power such that the induction propulsion motor is selectively driven at an operational speed independent of a rotational speed of a power shaft in the gas turbine engine.

Also disclosed is a computer program product configured to cause a processor to perform a method for hybrid propulsion for an aircraft. The method includes generating electric power via a motor generator operating within a gas turbine engine. The method further includes driving an induction propulsion motor with the electric power such that the induction propulsion motor is selectively driven at an operational speed independent of a rotational speed of a power shaft in the gas turbine engine.

### BRIEF DESCRIPTION OF THE DRAWINGS

The following descriptions should not be considered limiting in any way. With reference to the accompanying drawings, like elements are numbered alike:
FIG. 1 is a diagram of a system for hybrid propulsion for an aircraft; and
FIG. 2 is a flow diagram of a method for hybrid propulsion for an aircraft.

### DETAILED DESCRIPTION

A detailed description of one or more embodiments of the disclosed apparatus and method are presented herein by way of exemplification and not limitation with reference to the Figures.

Embodiments of the present invention may transmit high power (e.g., 0.2-40 MW) via an AC bus to an electric thruster motor directly from a dedicated voltage controlled turbo-generator having a voltage controlled variable frequency alternating current output. The electric thruster may be a variable speed, variable torque conventional induction or a line start permanent magnet motor that is connected to the thruster fan. The output torque of the induction motor can be varied by controlling the amplitude of the voltage on the alternating current bus. Some aspects include a system to control the output speed and torque of the thruster motor without utilizing large, heavy and expensive power electronics components for the high power condition at takeoff and cruise.

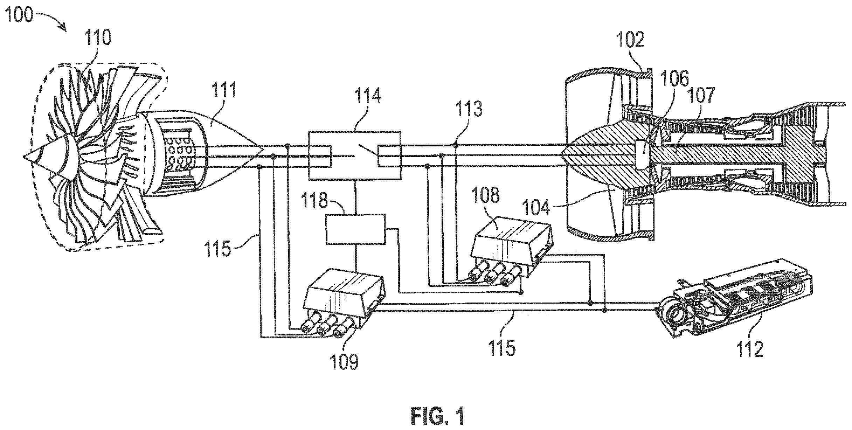

FIG. 1 is a diagram of a system 100 for hybrid propulsion for an aircraft, according to one embodiment. Referring now to FIG. 1, system 100 includes a gas turbine engine 102 that includes a propulsion fan 104. Propulsion fan 104 is fixed to a motor generator 106. Motor generator 106 may be a synchronous or asynchronous motor generator. Motor generator 106 includes a rotor (not shown) that is rigidly fixed to a power shaft 107 of the gas turbine engine 102 such that the gas turbine engine power shaft 107 can spin motor generator 106 and generate electrical power, or the motor generator 106 can spin the power shaft 107 of gas turbine engine 102 as a motor (*i.e.,* a starter).

System 100 further includes a first bi-directional inverter-rectifier 108 operatively connected to the motor generator 106 by an AC bus 113 and a second bi-directional inverter-rectifier 109 operatively connected to an induction propulsion motor 111. AC bus 113 may be a variable voltage, variable frequency high-power bus. High power may be, for example 30 MW. In other aspects, high power may refer to a range of power such as, for example, 0.2 MW to 40 MW. Bi-directional inverter-rectifiers 108 and 109 are bi-directional rectifiers and inverters insomuch as they can transmit and rectify power in either direction. Bi-directional inverter-rectifiers 108 and 109 may be active or passive devices. Accordingly, bi-directional inverter-rectifiers 108 and 109 may be configured to receive the electric power from motor generator 106 via AC bus 113, and convert the AC power to direct current (DC). Controller 118 is operatively connected to bi-directional inverter-rectifiers 108 and 109.

In one embodiment, motor generator 106 is a synchronous voltage controlled generator. This can be accomplished with a wound field generator, a variable flux permanent magnet generator, an induction generator, or a switched reluctance generator. In some aspects, motor generator 106 can make electricity to drive an induction propulsion motor 111. In some aspects, motor generator 106 can be integrated into the gas turbine engine 102 and connect to power shaft 107.

Direct power contactor assembly 114 may be configured as a switching mechanism that selectively connects power from motor generator 106 and induction propulsion motor 111. Contactor assembly 114 is used to break or make the direct AC connection between motor generator 106 and induction propulsion motor 111 for high power operation. When contactor assembly 114 is open, as depicted in FIG. 1, relatively low power (e.g., 100's of KW) flows from motor generator 106 through bi-directional inverter-rectifier 108 down a DC bus 115, through bi-directional inverter-rectifier 109 to induction propulsion motor 111. By opening contactor assembly 114, the system can provide low power, high efficiency variable speed operation of induction propulsion motor 111. In this mode of operation, the rotational direction of the induction propulsion motor can be reversed, allowing the propulsion system to provide low power reverse thrust. When high power is demanded (e.g., the demanded power is greater than a maximum power limit for which bi-directional inverter-rectifiers 108 and 109 are designed) the contactors in bi-directional inverter-rectifier 108 and bi-directional inverter-rectifier 109 are opened and contactor assembly 114 is closed, making the connection direct between motor generator 106 and induction propulsion motor 111. Direct power contactor assembly 114 is controlled by controller 118. Direct power contactor assembly 114 may include solid state switches, electromechanical switches, or a combination of both.

In one embodiment, system 100 includes an energy storage device 112 operatively connected in parallel to bi-directional inverter-rectifier 108 and the bi-directional inverter-rectifier 109 via a DC bus 115. Low power may be, for example -100 KW. In other aspects, low power may fall within a range of values such as, for example, 0 KW-200 KW. In some aspects, one or more of bi-directional inverter-rectifier 108 and bi-directional inverter-rectifier 109 may receive the electric power from motor generator 106, rectify the electric power, and provide the rectified power to energy storage device 112.

Induction propulsion motor 111 is an induction or line start permanent magnet motor fixedly connected to a propulsion fan 110. Accordingly, induction propulsion motor 111 receives variable power via AC bus 113 and/or DC bus 115 such that an operating speed of the induction propulsion motor 111 is different from an operating speed of the gas turbine engine 102.

According to one embodiment, controller 118 may be operatively connected to bi-directional inverter-rectifier 108, bi-directional inverter-rectifier 109, and direct power contactor assembly 114. Controller 118 includes at least one processor and a computer-readable memory (not shown), and operates in conjunction with or as a part of a flight controller (not shown). Accordingly, controller 118 may be configured to determine an engine speed, a voltage, a torque, an altitude, an airspeed, an amperage, a frequency, an inductance, and/or other measurements. Controller 118 may determine an operational status of one or more aircraft systems.

Under normal high power operating conditions, gas turbine engine 102 burns fuel to drive the motor generator 106 (to make electricity) and also to spin the gas turbine engine's propulsion fan 104. The generated electricity can be directly fed through direct power contactor assembly 114 to induction propulsion motor 111 to drive propulsion fan 110 when direct power contactor assembly 114 is closed. In this high power mode, the rotational speed of induction propulsion motor 111 is controlled by varying the voltage amplitude of the variable frequency AC power flowing from motor generator 106 to induction propulsion motor 111 via AC bus 113.

Under normal low power operating conditions, gas turbine engine 102 burns fuel to drive the motor generator 106 (to make electricity) and also to spin the gas turbine engine's propulsion fan 104. The generated electricity cannot directly feed through direct power contactor assembly 114 to induction propulsion motor 111 to drive propulsion fan 110 when direct power contactor assembly 114 is open. Electricity from motor generator 106 (being turned by power shaft 107 on gas turbine engine 102) is rectified by bi-directional inverter-rectifier 108 to provide DC power to DC bus 115. The DC power is then inverted by bi-directional inverter-rectifier 109 to a variable frequency AC signal that drives induction propulsion motor 111. Induction propulsion motor 111 spins propulsion fan 110 to provide electrically-driven propulsion to the aircraft.

If gas turbine engine 102 is not operating, energy storage device 112 can be used to supply DC power to bi-directional inverter-rectifier 109 to drive induction propulsion motor 111. Energy storage device 112 can supply DC power to bi-directional inverter-rectifier 108 to supply variable frequency AC power to the motor generator 106 in gas turbine engine 102 to start the gas turbine engine.

The electric power architecture shown in FIG. 1 allows for the low power bi-directional, variable speed operation of the tail cone thruster (induction propulsion motor 111) by using small light weight active rectifier inverters (bi-directional inverter-rectifiers 108 and 109) to couple the embedded generator 106 to the electric thruster motor. For high power operation, the active rectifiers are bypassed and the electric thruster speed is controlled independently from the gas turbine engine 102 speed by using a variable voltage generator (motor generator 106) in combination with the induction based thruster motor (induction propulsion motor 111). In one aspect, controller 118 can be configured to provide variable power to induction propulsion motor 111. For example, a processor (controller 118) may determine whether the gas turbine engine 102 has been started by an operator. Opening a contact serves to disconnect some or all of the power flowing through direct power contactor assembly 114 and place system 100 in a low-power operational mode.

Controller 118 can enable bi-directional inverter-rectifier 108 to receive a portion of the electric power from the motor generator 106. Bi-directional inverter-rectifiers 108 and 109 may be enabled, and the controller 118 may now configure motor generator 106 for maximum torque production. For example, controller 118 may cause the motor actuators (not shown) to retract the flux throttle sleeves (not shown). In other aspects, controller 118 may limit the power flow to bi-directional inverter-rectifiers 108 and 109 to a magnitude of power for which they are designed. It should be appreciated that operation of a variable power AC induction motor is known in the art and not explicitly described herein for brevity.

Once gas turbine engine 102 is running, motor generator 106 begins to feed power back to DC bus 115 through bi-directional inverter-rectifier 108. When propulsion is required, controller 118 enables bi-directional inverter-rectifier 109 to transmit the rectified power to induction propulsion motor 111. Accordingly, induction propulsion motor 111 begins to spin the propulsion fan 110.

Controller 118 may determine whether the induction propulsion motor 111 has reached a predetermined power threshold with respect to the bi-directional inverter-rectifier 109. For example, bi-directional propulsion motor may be configured to transmit a maximum of about 100 KW during low power operation. Accordingly, a predetermined power threshold may be a safe limit below the maximum of about 150 KW. In other aspects, a safe limit for low power operation may fall within a range of power (e.g., 130 KW - 200 KW). Responsive to determining that induction propulsion motor 111 has reached the predetermined power threshold, controller 118 may disable bi-directional inverter-rectifiers 108 and 109, and close at least one contactor in the direct power contactor assembly 114. By closing one or more contactors in the direct power contactor assembly 114, controller 118 connects induction propulsion motor 111 directly to motor generator 106 to place system 100 into a high-power operational mode. In the high-power operational mode, the propulsion power of induction propulsion motor 111 is controlled by the amplitude of the AC voltage on the AC bus 113.

In some aspects, controller 118 may cause bi-directional inverter-rectifier 108 to transmit the rectified electric power to an energy storage device 112. In some aspects, energy storage device 112 may be a battery, a battery bank, or other electric power storage mechanism. With the energy stored in energy storage device 112, controller 118 may cause energy storage device 112 to transmit the stored power to induction propulsion motor 111.

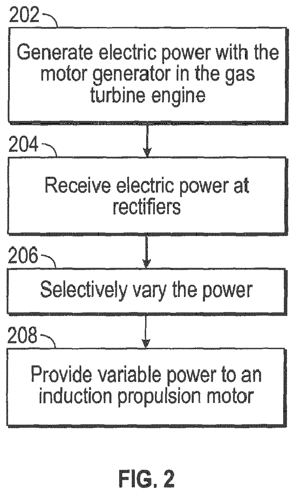

FIG. 2 is a flow diagram of a method for hybrid propulsion for an aircraft, according to one embodiment. As shown in block 202, controller 118 may cause motor generator 106 to generate power via a motor generator 106 having a rotor fixed to a gas turbine engine power shaft 107. Motor generator 106 may receive torsional energy from the gas turbine engine 102 and function as a generator.

As shown in block 204, controller 118 may cause motor generator 106 to convert the torsional energy to electric power. More particularly, motor generator 106 is fixed to the gas turbine engine power shaft 107 and configured to synchronously rotate with the gas turbine engine 102.

At block 206, bi-directional inverter-rectifier 108 receives AC power from motor generator 106 and rectifies the AC power to DC power. Bi-directional inverter-rectifier 109 receives DC power from DC bus 115 and creates AC power to send to induction propulsion motor 111. Accordingly, controller 118 may selectively vary the power transmitted through DC bus 115 and/or AC bus 113. Controller 118 can vary the transmitted power in a variety of ways. In a wound field machine, the rotor flux is controlled by varying the current on the rotor windings. In a PM generator, the rotor flux is controlled by changing the magnetic coupling between the rotor and the stator, either through a magnetic flux sleeve, axially displacing the rotor out of the stator cavity, or using flux saturation techniques in the rotor or the stator.

According to some embodiments, in the induction propulsion motor 111 the output torque is controlled by varying the voltage applied to the stator, which varies the current in the stator. The varied current in the stator of the induction motor changes the amount of flux crossing the air gap between the stator and the rotor. The combination of the flux magnitude acting on the induction motor rotor and the motor slip factor drives the current in the induction motor rotor, which drives the flux on the induction motor rotor. The coupling of the flux on the induction motor rotor and the induction motor stator produces torque that is transferred to propulsion fan 110.

In one aspect, controller 118 may vary the amplitude of the applied voltage to induction propulsion motor 111. Controller 118 may control the output torque of the induction propulsion motor 111 by changing the applied voltage in a variety of ways. For example, controller 118 can control the output voltage of motor generator 106, independent of the speed of motor generator 106. The generator output frequency is tied to the generator speed, so the generator output is variable voltage, and variable frequency.

As shown in block 208, controller 118 may provide the variable power to induction propulsion motor 111 such that an operating speed of induction propulsion motor 111 is different from an operating speed of motor generator 106 fixed to power shaft 107 of gas turbine engine 102.

Embodiments of the present invention may provide a hybrid propulsion architecture for the variable-speed induction propulsion motor that allows for the use of smaller power electronics components (e.g., bi-directional inverter-rectifier 108 and bi-directional inverter-rectifier 109) that are reduced in weight and size compared to those required to support variable frequency operation of the full power system. Embodiments of the present invention also allow the propulsion fan 110 to operate at speeds that are independent of the operating speed of the gas turbine engine (e.g., gas turbine engine 102). According to yet other embodiments, system 100 may enable low power reversal of propulsion fan 110's rotation to reverse the direction of thrust and slow the aircraft in flight.

Additionally, energy storage device 112 may power induction propulsion motor 111 for ground operations and provide emergency operational power in the event of main engine failure. Adding an energy storage system (e.g., energy storage device 112) and the associated power electronics to the electrical system can allow the pilot to reverse the direction of the induction propulsion motor in the tail cone to provide the thrust reversing function. Induction propulsion motor 111 could also be used for ground operations to pull the aircraft away from the gate by operating the thruster in reverse, which would eliminate hazards and wear associated with operating gas turbine engine 102 in ground operations. Finally, during ground maneuvers, the electric thruster could be utilized to decelerate the aircraft, reducing the need to use the main aircraft brakes during ground maneuvers. Power for the hybrid electric system may also be supplied by a dedicated gas engine, such as an Auxiliary Power Unit (APU).

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor controller 118, or other operatively connected programmable data processing apparatus (not shown) to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer (e.g., controller 118) other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention as defined by the claims. In addition, many modifications may be made to adapt a particular situation or material to the teachings of the present disclosure without departing from the scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for hybrid propulsion for an aircraft comprising:
a gas turbine engine (102) comprising a power shaft (107);
a motor generator (106) operatively connected to the power shaft of the gas turbine engine and configured to produce electric power; and
an electric propulsion motor (111) configured to receive the electric power and be selectively driven at an operational speed independent of a rotational speed of the power shaft.

2. The system of claim 1, wherein the electric propulsion motor (111) is selectively driven in one of a high power mode via a direct connection to the motor generator and a low power mode that is not directly connected to the motor generator.

3. The system of claim 2, wherein the electric propulsion motor (111) is selectively driven in reverse in the low power mode to provide low power reverse thrust.

4. The system of claim 1, further comprising:
a first bi-directional inverter-rectifier (108) operatively connected to the motor generator and configured to receive the electric power from the motor generator;
a direct power contactor assembly (114) operatively connected to the first bi-directional inverter-rectifier and an induction propulsion motor; and
a second bi-directional inverter-rectifier (109) operatively connected to the direct power contactor assembly and the induction propulsion motor.

5. The system of claim 4, further comprising a controller (118) operatively connected to the first bi-directional inverter-rectifier, the second bi-directional inverter-rectifier, and the direct power contactor assembly, wherein the controller comprises a processor configured to provide the electric power to the induction propulsion motor.

6. The system of claim 5, wherein the processor is further configured to:
determine whether the induction propulsion motor has reached a predetermined power threshold with respect to the first and second bi-directional inverter-rectifiers, and responsive to determining that the induction propulsion motor has reached the predetermined power threshold:
disable the first and second bi-directional inverter-rectifiers; and
disconnect the motor generator from the electric propulsion motor via the direct power contactor assembly such that the motor generator is no longer directly connected to the electric propulsion motor.

7. The system of claim 4, further comprising an energy storage device (112) operatively connected in parallel to the first bi-directional inverter-rectifier and the second bi-directional inverter-rectifier, wherein the first bi-directional inverter-rectifier is configured to:
receive the electric power from the motor generator;
rectify the electric power; and
selectively provide the rectified power to the energy storage device without operation of the gas turbine engine.

8. A method for hybrid propulsion for an aircraft comprising:
generating electric power via a motor generator operating within a gas turbine engine; and
driving an induction propulsion motor with the electric power such that the induction propulsion motor is selectively driven at an operational speed independent of a rotational speed of a power shaft in the gas turbine engine.

9. The method of claim 8, further comprising selectively driving the electric propulsion motor in one of a high power mode via a direct connection to the motor generator, and a low power mode that is not directly connected to the motor generator.

10. The method of claim 9, further comprising:
selectively driving the electric propulsion motor in reverse in the low power mode; and
providing reverse thrust in the low power mode.

11. The method of claim 8, further comprising:
receiving the electric power from the motor generator at a first bi-directional inverter-rectifier operatively connected to the motor generator;
connecting a direct power contactor assembly to the first bi-directional inverter-rectifier and an induction propulsion motor; and
connecting a second bi-directional inverter-rectifier to the direct power contactor assembly and the induction propulsion motor.

12. The method of claim 11, further comprising:
connecting a controller to the first bi-directional inverter-rectifier, the second bi-directional inverter-rectifier, and the direct power contactor assembly; and
providing the electric power to the induction propulsion motor via the processor.

13. The method of claim 12, further comprising:
determining, via the processor, whether the induction propulsion motor has reached a predetermined power threshold with respect to the first and second bi-directional inverter-rectifiers, and responsive to determining that the induction propulsion motor has reached the predetermined power threshold:
disabling, via the processor, the first and second bi-directional inverter-rectifiers; and
disconnecting, via the processor, the motor generator from the electric propulsion motor via the direct power contactor assembly such that the motor generator is no longer directly connected to the electric propulsion motor.

14. The method of claim 11, further comprising:
connecting an energy storage device in parallel to the first bi-directional inverter-rectifier and the second bi-directional inverter-rectifier, wherein the first bi-directional inverter-rectifier is configured for:
receiving the electric power from the motor generator;
rectifying the electric power; and
selectively providing the rectified power to the energy storage device without operation of the gas turbine engine.
